# EUROPEAN PATENT SPECIFICATION

(11) **EP 3 984 673 B1**
(45) Date of publication and mention of the grant of the patent: **26.07.2023**
(21) Application number: 21203193.4
(22) Date of filing: 18.10.2021
(51) Int. Cl.: B23D 45/00, B23D 45/12, B23D 45/26, B23D 47/04, B25J 11/00

(54) **DEVICE FOR CUTTING PIPES IN A BUNDLE WITHOUT ADDITIONAL CLAMPING**
VORRICHTUNG ZUM SCHNEIDEN VON ROHREN IN EINEM BÜNDEL OHNE ZUSÄTZLICHES EINSPANNEN
DISPOSITIF POUR COUPER DES TUBES EN FAISCEAU SANS SERRAGE SUPPLÉMENTAIRE

(30) Priority: 19.10.2020 SK 501102020 U
(43) Date of publication of application: 20.04.2022
(73) Proprietor: Technická Univerzita V Kosiciach, 04200 Kosice-Sever (SK); Vuje, A.S., 918 64 Trnava (SK)
(72) Inventor: Vargovcík, Ladislav, 04011 Kosice (SK); Semjon, Ján, 04022 Kosice (SK); Varga, Jozef, 04011 Kosice (SK); Stubna, Marián, 91701 Trnava (SK); Kravárik, Kamil, 91925 Súrovce (SK); Maláková, Silvia, 04001 Kosice (SK); Ondra, Frantisek, 90081 Senkvice (SK)

(56) References cited:
- CN-A- 108 213 575
- CN-A- 111 673 766
- CN-A- 113 021 372

## Description

### Field of invention

The invention can be classified in the field of robotics, production technology, and automation technology.

### Background to the invention

The following technologies are currently used for cutting pipe/tube bundles, especially in steam generators:
- cutting tubes with a band saw after the casing has been removed, whereby the tubes fall in a disorganized manner into a container and must then be oriented for further processing, involving an increased proportion of human labor;
- band sawing through the entire cross-section of the steam generator, i.e. the casing and tubes together (dry or in ice), meaning that after the segment has been placed on the plate, the casing ring has to be removed and the tubes laboriously disassembled and placed into containers. This results in excessive exposure of the operator to contamination or radioactivity. ("Erfahrungen aus dem Rückbau von KRB A", H. Steiner, MK Steifensand, D. Wiedig, presentation http://docplayer.org/37927396-Erfahrungen-aus-dem-rueckbauvon-krb-a-helmut-steiner- marc-konstantin-steifensand-dirk-wiedig.html);
- cutting with a grinding disc mounted on a manipulator with simultaneous rotation of the steam generator. ("New Treatment Concept for Steam Generators Technical Aspects", WM"07 Conference, 02/2007, Tucson, AZ) This technology generates a significant dust component, requires frequent tool changes and operator exposure. Again, a disorderly cluster of tubes is formed.

A device as per the preamble of appended claim 1 is known from CN111673766A.

### Summary of the invention

The proposed invention is a device comprising the combination of features of appended claim 1. The device comprises a high-speed circular saw blade for cutting (600 rpm and higher), which generates lower cutting forces than a standard low-speed blade and therefore does not place extreme demands on the rigidity of its carrier. This carrier may be a manipulator or other mechanism for moving the driven blade in the cutting plane.

The cut tubes are caught in a basket that is loosely mounted pivotally around the axis of rotation of the saw blade, which by gravity ensures that the basket is always positioned below the cutting point.

The high-speed blade, in contrast to the low-speed blade, exerts less force on the part of the tube being cut, i.e. it does not tend to change direction too much during the cut. In the case of a tube falling diagonally, there may be a catch plate on the basket to guide it.

There may be a baffle between the cutting disc and the basket to prevent undesired contact of the falling tube with the disc. A support plate may be fixed on the basket in the path of the falling tube, preventing the tube from falling obliquely into the basket and thus jamming it.

The novelty of the device lies in the automatically arranged removal of tubes without an additional drive, without the need to clamp the tubes during cutting.

The proposed invention enables the organized collection of cut tubes into a basket, from which, after it is filled, they are discharged into a subsequent removal means ensuring their transport for further processing. The use of a high-speed saw blade for cutting the tubes in conjunction with a manipulator ensures high productivity of the equipment and the possibility of remote control or full automation and thus minimal operator exposure in the case of radioactive or otherwise contaminated environment.

### Brief description of the drawings

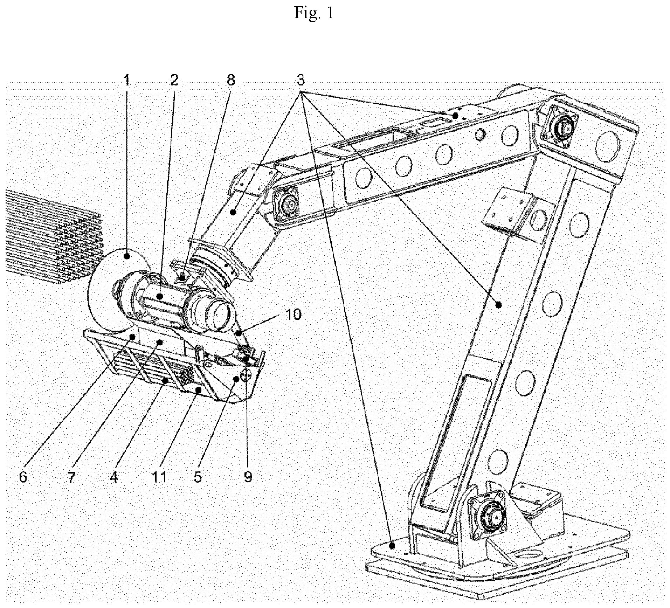

The invention is explained in more detail by means of a drawing, with Fig. 1 showing the design solution.

### Detailed description

Fig. 1 shows an example of implementation of the proposed invention. It is a prototype of the device designed for fragmentation of heat exchanger tubes of steam generators in a nuclear power plant.

The device for cutting pipes in a bundle without additional clamping has, in this example of implementation, a manipulator 3 as the source of movement of the high-speed saw blade 1 into the cut. As the effector of the manipulator, a cutting head is attached to the flange of its end arm, comprising a console 8 in which an actuator 2 for rotation of the saw blade is mounted with a high-speed saw blade at its output. A basket 5 with a linear drive 9 connecting the basket frame 10 to the tilting bottom 11 of the basket, is pivotally mounted on the console 8 about the axis of the high-speed saw blade 1.

The proposed invention uses a high-speed saw blade 1 (1400 rpm) for cutting, which generates lower cutting forces than a standard low-speed blade and therefore does not place extreme demands on the rigidity of its carrier. This carrier is the manipulator 3, which ensures the movement of the blade with the drive 2 in the cutting plane.

The cut pipes 4 are caught in a basket 5 loosely pivotally mounted about the axis of rotation of the saw blade, which by gravity ensures that the position of the basket 5 is always below the cutting point.

Between the cutting blade and the basket 5 there is a baffle 6 preventing undesired contact of the falling tube with the blade.

A support plate 7 is fixed on the basket 5 in the path of the falling tube, preventing the tube from falling obliquely into the basket 5 and thus jamming it.

### Industrial applicability

The device for cutting pipes in a bundle without additional clamping can be used mainly in the disposal of steam generators in decommissioned nuclear power plants, but also in the disposal of large heat exchangers contaminated with chemicals, the dispersion of which into the air would be health or life threatening.

## Claims

1. Device for cutting pipes in a bundle without additional clamping, whereby the device comprises a cutting head carrier with an end arm comprising a flange, whereby a cutting head with a console (8) is fixed on said flange of said end arm, and a drive (2) for the rotation of a high-speed saw blade (1) is mounted in the console (8) and a high-speed saw blade (1) is positioned at the outlet of the drive (2), **characterized in that** at the same time a basket (5) is loosely mounted to the console (8) pivotally about the axis of rotation of the high-speed saw blade (1).

2. Device for cutting pipes in a bundle without additional clamping according to claim 1, **characterized in that** a baffle (6) is mounted between the high-speed saw blade (1) and the basket (5).

3. Device for cutting pipes in a bundle without additional clamping according to claim 1, **characterized in that** a support plate (7) is fixed on the basket (5) in the fall path of the pipe.

## Patentansprüche

1. Vorrichtung zum Schneiden von Rohren in einem Bündel ohne zusätzliches Einspannen, wobei die Vorrichtung einen Schneidkopfträger mit einem Endarm umfasst, der einen Flansch aufweist, wobei ein Schneidkopf mit einer Konsole (8) an dem Flansch des Endarms befestigt ist, und ein Antrieb (2) für die Drehung eines Hochgeschwindigkeitssägeblattes (1) in der Konsole (8) angebracht ist und ein Hochgeschwindigkeitssägeblatt (1) am Ausgang des Antriebs (2) positioniert ist, **dadurch gekennzeichnet, dass** gleichzeitig ein Korb (5) lose an der Konsole (8) schwenkbar um die Drehachse des Hochgeschwindigkeitssägeblattes (1) angebracht ist.

2. Vorrichtung zum Schneiden von Rohren in einem Bündel ohne zusätzliches Einspannen nach Anspruch 1, **dadurch gekennzeichnet, dass** zwischen dem Hochgeschwindigkeitssägeblatt (1) und dem Korb (5) ein Ablenkblech (6) angebracht ist.

3. Vorrichtung zum Schneiden von Rohren in einem Bündel ohne zusätzliches Einspannen nach Anspruch 1, **dadurch gekennzeichnet, dass** eine Stützplatte (7) auf dem Korb (5) in der Fallbahn des Rohres befestigt ist.

## Revendications

1. Dispositif de coupe de tubes en faisceau sans serrage supplémentaire, le dispositive comprenant un support de tête de coupe avec un bras d'extrémité comportant une bride, une tête de coupe avec une console (8) étant fixée sur ladite bride dudit bras d'extrémité, et un entraînement (2) pour la rotation d'une lame de scie à grande vitesse (1) est monté dans la console (8) et une lame de scie à grande vitesse (1) est positionnée à la sortie de l'entraînement (2), **caractérisé en ce qu'**en même temps un panier (5) est monté librement sur la console (8) pivotant autour de l'axe de rotation de la lame de scie à grande vitesse (1).

2. Dispositif de coupe de tubes en faisceau sans serrage supplémentaire selon la revendication 1, **caractérisé en ce qu'**une chicane (6) est montée entre la lame de scie à grande vitesse (1) et le panier (5).

3. Dispositif de coupe de tubes en faisceau sans serrage supplémentaire selon la revendication 1, **caractérisé en ce qu'**une plaque de support (7) est fixée sur le panier (5) dans la trajectoire de chute du tuyau.
